# EUROPÄISCHE PATENTSCHRIFT

(11) **EP 1 272 339 B1**
(45) Veröffentlichungstag und Bekanntmachung des Hinweises auf die Patenterteilung: **21.02.2007**
(21) Anmeldenummer: 01925534.8
(22) Anmeldetag: 06.04.2001
(51) Int. Cl.: B30B 9/22

(54) **PRESSE ZUM AUSPRESSEN VON FLÜSSIGKEITSHALTIGEN STOFFEN**
PRESS FOR THE PRESSING OF FLUID-CONTAINING MATERIALS
PRESSE POUR LE PRESSAGE DE MATIERES CONTENANT DU LIQUIDE

(30) Priorität: 08.04.2000 DE 20006498 U
(43) Veröffentlichungstag der Anmeldung: 08.01.2003
(73) Patentinhaber: Willmes Anlagentechnik GmbH, 68623 Lampertheim (DE)
(72) Erfinder: KRAMMER, Volker, 69469 Weinheim (DE)
(74) Vertreter: Kesselhut, Wolf
(86) Internationale Anmeldenummer: PCT/EP2001/003962
(87) Internationale Veröffentlichungsnummer: WO 2001/076857

(56) Entgegenhaltungen:
- EP-A- 0 122 115
- EP-A- 0 145 948
- WO-A-95/01258
- DE-U- 8 512 954
- DE-U- 20 011 979
- GB-A- 2 158 697
- US-A- 4 350 089
- US-A- 4 516 490

## Beschreibung

Die Erfindung betrifft eine Presse zum Auspressen von flüssigkeitshaltigen Stoffen, nämlich landwirtschaftlichen und chemischen Produkten. Die Presse weist einen geschlossenen Behälter auf, der um seine waagerechte Längsachse in Rotation versetzbar ist. Im Behältermantel befindet sich eine durch einen Deckel verschliessbare Einfüll- und Entleeröffnung und gegenüberliegend befindet sich ein Saftablauf.

Eine derartige Presse ist bekannt (EP 0 145 948 B1), bei der im Durchmesserbereich des Behälters flüssigkeitsdurchlässige Rohre als Drainageelemente vorgesehen sind, die sich in einem Pressraum befinden. Im Inneren des Behälters ist eine Pressmembrane druckmitteldicht befestigt, die den Behälterinnenraum in einen Druckmittel- und den Pressraum unterteilt.

Bei solchen Pressen kommt es entscheidend darauf an, dass die beim Pressen mit dem Pressgut in Berührung kommenden Teile, wie Drainageelemente, zu Reinigungszwecken einfach demontiert und montiert werden können und darüber hinaus auch bei Beschädigungen der Pressmembrane diese einfach ausgewechselt werden kann. Hierbei ist es wichtig, dass die Demontierbarkeit und auch das Reinigen von außen erfolgen kann, d.h. dass ein Einsteigen in den Behälter nicht erforderlich ist.

Der Erfindung liegt die Aufgabe zugrunde, eine Presse der bekannten Art so auszubilden, dass zu Reinigungszwecken eine leichte Demontierbarkeit der wesentlichen Teile von außen möglich ist und die Pressmembrane durch eine einfache Konfektionierbarkeit kostengünstig herstellbar ist.

Diese Aufgabe wird durch die Kombination der Merkmale des Anspruchs 1 gelöst. Erfindungsgemäß sind die Drainageelemente elastisch ausgebildet und weisen ein Siebgewebe auf, das über ein wabenförmiges, in axialer Richtung elastisches Stützrohr gestülpt ist und das am Behälter befestigt ist.

Eine vorteilhafte Ausführungsform sieht vor, dass in die Rohre der Drainageelemente Stützrohre einsetzbar sind, im wesentlichen bestehend aus einem Kernrohr mit vermindertem Durchmesser und im Abstand zueinander befindlichen gelochten Ringen.

Es wird weiterhin vorgeschlagen, dass in das Rohr der Drainageelemente ein Demontagestab einsetzbar ist.

Schliesslich ist es vorteilhaft, dass die Füllstellung durch die Einfüll- und Entleeröffnung und die Preßstellung des Behälters übereinstimmen und keine Rotationsbewegung des Behälters erfordern.

Die Erfindung wird in der nachfolgenden Beschreibung anhand von in den Zeichnungen dargestellten Ausführungsbeispielen näher erläutert.

Es zeigen,
- Fig. 1: eine schaubildliche Ansicht einer Presse nach der Erfindung,
- Fig. 2: eine entsprechende Darstellung unter Weglassung der Drainageelemente,
- Fig. 3: eine schaubildliche Ansicht eines Stützrohres,

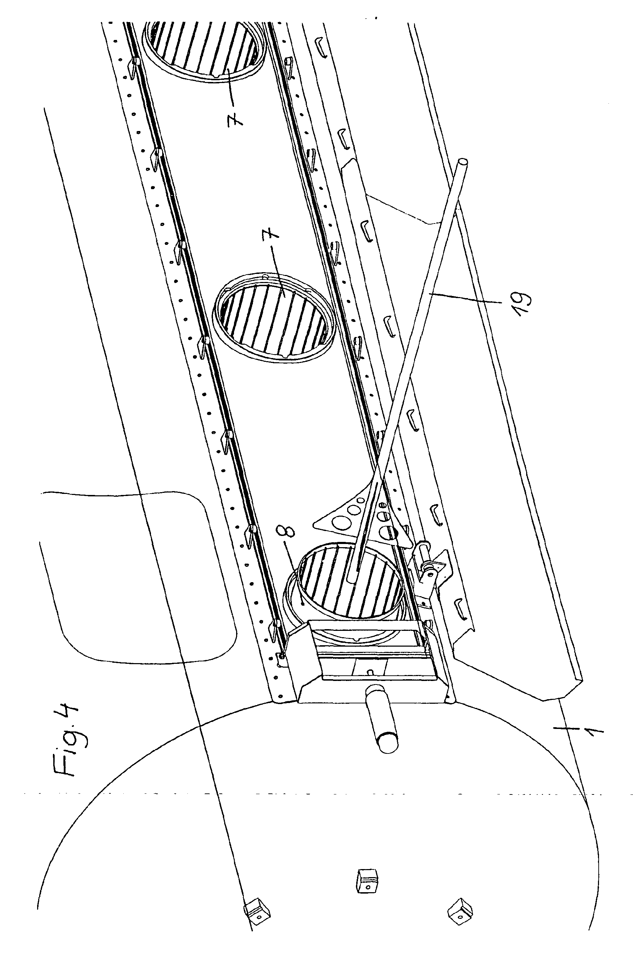

- Fig. 4: eine vergrösserte Ansicht von der Unterseite der Presse mit einer Demontagehilfe und
- Fig. 5: eine schaubildliche Ansicht eines elastischen Drainageelementes.

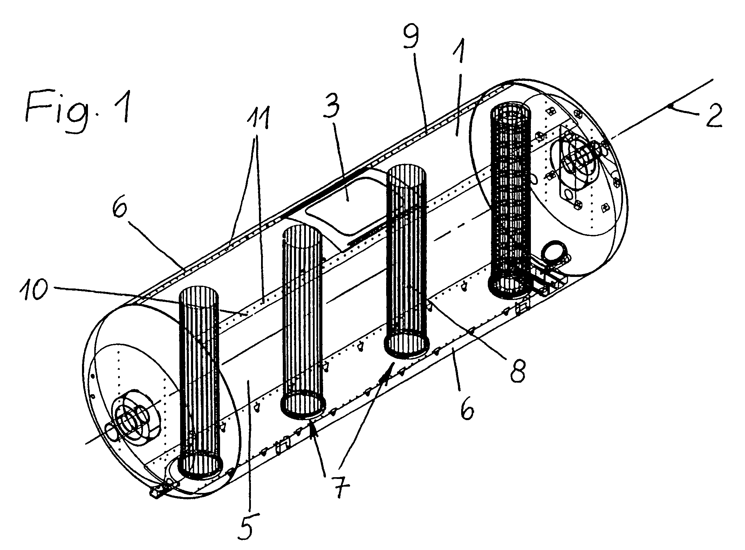

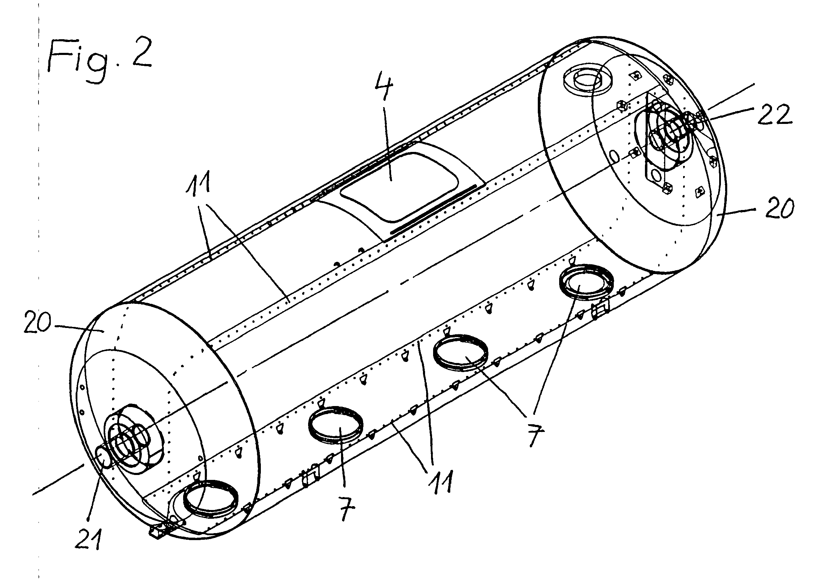

Die in den Figuren 1 und 2 dargestellte Presse weist einen länglichen zylindrischen Behälter 1 auf, der sich in Richtung einer waagerechten Längsachse 2 als Drehachse erstreckt. Zu beiden Seiten des Behälters 1 sind runde Böden 20 angeordnet. Weiterhin besitzt der Behälter 1 Lagerzapfen 21 bzw. 22, wobei der Lagerzapfen 21 als Einfüllöffnung für auszupressendes Material, wenn dieses mit einer Pumpe zugeführt wird, dient. An dem anderen Lagerzapfen 22 kann Pressluft zugeführt werden. Weiterhin besitzt der Behälter 1 eine Einfüll- und Entleeröffnung 4, die mit einem Deckel 3 dicht verschliessbar ist. In dem Behälter 1 sind weiterhin flüssigkeitsdurchlässige Rohre 8 im Durchmesserbereich des Behälters 1 vorgesehen, die einen kreisrunden, ovalen oder mehreckigen Querschnitt aufweisen. Diese Rohre 8 dienen als Drainageelemente und sind senkrecht zur Längsachse 2 angebracht. An der zum Deckel 3 hin gegenüberliegenden Seite weisen diese als Drainageelemente wirkenden Rohre 8 einen Saftablauf 7 auf.

Zu beiden Seiten der Reihe dieser Rohre 8 sind in parallel zur Längsachse 2 verlaufenden Einspannebenen Pressmemebranen 9 bzw. 10 mit Hilfe von Andruckleisten 11 druckmitteldicht befestigt, so dass im Bereich der Drainageelemente 8 ein Pressraum 5 und außerhalb davon zu beiden Seiten ein Druckmittelraum 6 gebildet wird.

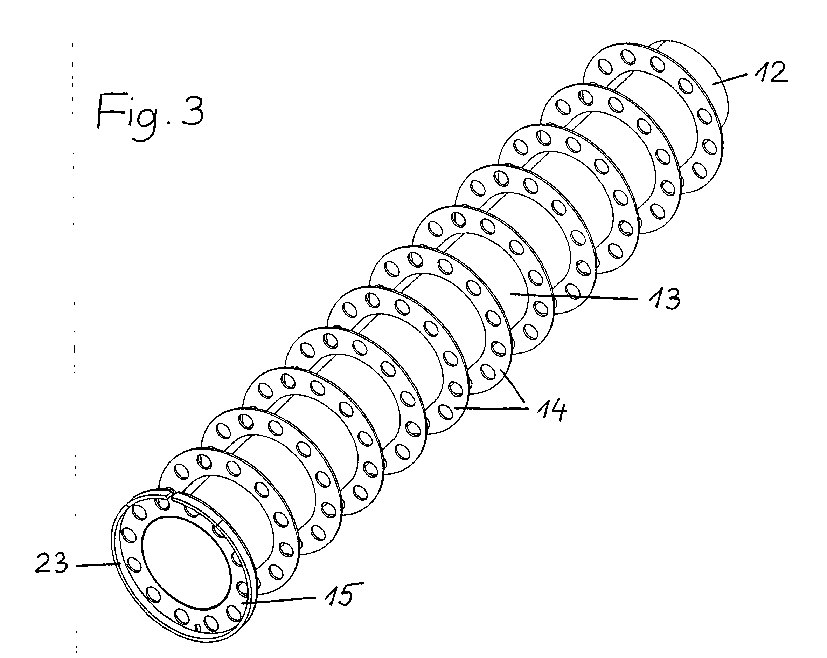

Bei einer Vergrösserung der Dimensionierung der Rohre 8 der Drainage-elemente im Durchmesser werden Stützrohre 12 eingesetzt, die ein Kernrohr 13 und im Abstand auf diesem Kernrohr 13 gelochte Ringe 14 aufweisen (Fig. 3). Der unterste Ring des Stützrohres, und zwar im Bereich des Saftablaufes 7, ist als Abstandsring 15 mit einem Kragen 23 versehen, ausgebildet. Die Saftablauföffnungen 7 sind für den Pressvorgang gegen statischen Druck abgedichtet. Weiterhin sind die beiden vorgesehenen Pressmembranen 9 entweder als flexible Membranen sackförmig ausgebildet, d.h. sie kleiden ausgehend von der Einspannebene den entsprechenden Behältermantel aus oder sie sind als elastische Membranen als flache Gebilde entsprechend der Einspannebene ausgestaltet und dehnen sich beim Befüllen des Behälters nach außen hin aus. Bei dieser Plattenform der Membranen 9, 10 ist eine besondere zusätzliche Konfektion, z.B. das Zusammenschweißen mehrerer Stücke, nicht erforderlich.

Die Stützrohre 12 können zu Reinigungszwecken mit Hilfe eines Demontagestabes 19, der von dem Saftablauf 7 her in das Rohr 8 der Drainageelemente eingeschoben wird, entnommen werden. Gegebenenfalls lassen sich sowohl die Rohre 8 als Drainageelemente als auch die Stützrohre 12 teilen, so dass eine Platz- und Gewichtsersparnis bei der Bedienung zu erzielen ist.

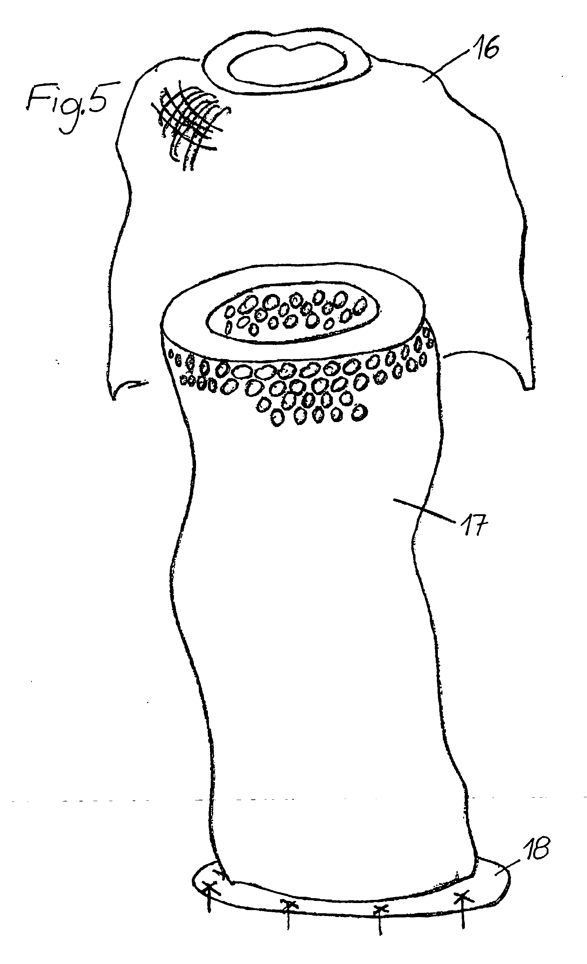

Die Figur 5 zeigt die Ausgestaltung der vertikalen Drainageelemente, wobei diese Drainageelemente als Schläuche ein Siebgewebe 16 aufweisen, das über ein wabenförmiges, in Axialrichtung elastisches Stützrohr 17 gestülpt ist. Die Enden dieser Drainageelemente 16, 17 sind an den nicht von den Pressmembranen 9, 10 abgedeckten Stellen des Pressbehälters 1 angebracht.

Der wesentliche Vorteil der Presse besteht darin, dass das Befüllen und Pressen in der gleichen Position erfolgt, ohne dass für das Pressen der Behälter um 180° gedreht wird. Lediglich zum Auflockern des Behälterinhaltes, beispielsweise der Maische, erfolgt ein solches Drehen des Behälters.

## Patentansprüche

1. Presse zum Auspressen von flüssigkeitshaltigen Stoffen, nämlich landwirtschaftlichen und chemischen Produkten, mit einem geschlossenen Behälter (1), der um seine waagerechte Längsachse (2) in Rotation versetzbar ist, wobei im Behältermantel eine durch einen Deckel (3) verschließbare Einfüll- und Entleeröffnung (4) angeordnet ist, der ein im Pressraum (5) befindlicher Saftablauf (7) gegenüberliegt, dass im Inneren des Behälters (1) über den Durchmesser und senkrecht zur Behälterachse (2) flüssigkeitsdurchlässige Rohre (8) mit Kreisförmigem Querschnitt als Drainageelemente vorgesehen sind, dass zu beiden Seiten der Reihe von Drainageelementen (8) je eine Pressmembrane (9, 10) vorgesehen ist, deren Befestigungsebenen parallel zur Behälterachse (2) verlaufen und die aus elastischem oder flexiblem Material bestehen und den Behälter (1) in zwei Druckmittelräumg (6) und einen Pressraum (5) unterteilen, wobei die Befestigung der Membranen (9, 10) mit Hilfe von Andruckleisten (11) erfolgt, **dadurch gekennzeichnet, dass** die Drainageelemente elastisch ausgebildet sind und ein Siebgewebe (16) aufweisen, das über ein wabenförmiges, in axialer Richtung elastisches Stützrohr (17) gestülpt ist und das am Behälter (1) befestigt ist.

2. Presse nach Anspruch 1, **dadurch gekennzeichnet, dass** in die Drainageelemente Stützrohre (12) einsetzbar sind, im wesentlichen bestehend aus einem Kernrohr (13) mit vermindertem Durchmesser und im Abstand zueinander befindlichen gelochten Ringen (14).

3. Presse nach Anspruch 1 und 2, **dadurch gekennzeichnet, dass** die Füllstellung durch die Einfüll- und Entleeröffnung (4) und die Preßstellung des Behälters (1) übereinstimmen und keine Rotationsbewegung des Behälters (1) erfordern.

## Claims

1. Press for pressing liquid-containing substances, namely agricultural and chemical products, having a closed container (1), which can be displaced in rotation about its horizontal longitudinal axis, an opening (4), which can be closed by a cover (3), for filling and emptying the container being arranged in the cladding thereof, said container opposing an outlet (7) for juice disposed in the pressing chamber (5), liquid-permeable tubes (8) having a circular cross-section being provided as drainage elements over the diameter and perpendicular to the container axis (2) in the interior of the container (1), a respective pressing membrane (9, 10) being provided on both sides of the row of drainage elements (8), the fixing planes of the pressing membranes extending parallel to the container axis (2) and the pressing membranes being made from resilient or flexible material and dividing the container (1) into two chambers (6) for pressure medium and a pressing chamber (5), the membranes (9,10) being fixed using pressure strips (11), **characterised in that** the drainage elements are resiliently constructed and comprise a screen mesh (16), which is drawn over a honeycombed support tube (17) that is resilient in an axial direction and is fixed to the container (1).

2. Press according to claim 1, **characterised in that** support tubes (12) can be inserted into the drainage elements and substantially consist of a core tube (13) having a reduced diameter and perforated rings (14) spaced from one another.

3. Press according to claim 1 and claim 2, **characterised in that** the position for filling the container through the opening (4) for filling and emptying and the pressing position of the container (1) correspond and do not require the container (1) to be rotated.

## Revendications

1. Presse pour le pressage de matières contenant du liquide, à savoir de produits agricoles et chimiques, comprenant un réservoir fermé (1) pouvant être mis en rotation autour de son axe longitudinal horizontal (2), une ouverture de remplissage et de vidange (4), pouvant être fermée au moyen d'un couvercle (3), étant disposée dans l'enveloppe du réservoir, en face de laquelle ouverture de remplissage et de vidange est située une sortie de jus (7) se trouvant dans la chambre de pressage (5), de telle manière que des tubes (8) imperméables au liquide, de section transversale en forme de cercle, sont prévus comme éléments de drainage à l'intérieur du réservoir (1), sur le diamètre et perpendiculairement à l'axe du réservoir (2), qu'une membrane de pressage (9, 10) est respectivement prévue des deux côtés de la rangée d'éléments de drainage (8), dont les niveaux de fixation s'étendent parallèlement à l'axe du réservoir (2) et qui sont constituées de matière élastique ou flexible et divisent le réservoir (1) en deux chambres de moyens de pressage (6) et en une chambre de pressage (5), la fixation des membranes (9, 10) étant réalisée à l'aide de baguettes de pression (11), **caractérisée en ce que** les éléments de drainage sont exécutés de manière élastique et présentent un tissu de tamis (16) qui est retourné sur un tube de support (17) élastique en direction axiale et en forme de nid d'abeilles, et qui est fixé sur le réservoir (1).

2. Presse selon la revendication 1, **caractérisée en ce que** des tubes de support (12) sont insérables dans les éléments de drainage, essentiellement constitués d'un tube central (13) de diamètre réduit et d'anneaux perforés (14) se trouvant à distance les uns des autres.

3. Presse selon les revendications 1 et 2, **caractérisée en ce que** la position de remplissage à travers l'ouverture de remplissage et de vidange (4) et la position de pressage du réservoir (1) correspondent et ne nécessitent aucun mouvement de rotation du réservoir (1).
